# EUROPÄISCHE PATENTSCHRIFT

(11) **EP 1 236 918 B1**
(45) Veröffentlichungstag und Bekanntmachung des Hinweises auf die Patenterteilung: **15.10.2003**
(21) Anmeldenummer: 01129361.0
(22) Anmeldetag: 17.12.2001
(51) Int. Cl.: F16D 25/10

(54) **Kupplungssystem mit einer unter Vermittlung einer Hydraulik-Pumpenanordnung betätigbaren Kupplungseinrichtung**
Clutch system with a pump actuated clutch
Système d'embrayage avec un embrayage à actionnement par une pompe

(30) Priorität: 22.02.2001 DE 10108668
(43) Veröffentlichungstag der Anmeldung: 04.09.2002
(73) Patentinhaber: ZF Sachs AG, 97424 Schweinfurt (DE)
(72) Erfinder: Schneider, Hans-Jürgen, Dipl.-Ing., 97440 Stettbach (DE); Busold, Thomas, Dipl.-Ing., 36039 Fulda (DE); Moseler, Olaf, Dr., 97070 Würzburg (DE)

(56) Entgegenhaltungen:
- EP-A- 0 348 270
- DE-A- 3 829 312
- DE-A- 10 034 745
- US-A- 3 741 360
- US-A- 3 830 349
- US-A- 4 129 148
- US-A- 4 691 597
- US-A- 5 577 588
- PATENT ABSTRACTS OF JAPAN vol. 015, no. 298 (M-1141), 29. Juli 1991 (1991-07-29) & JP 03 107620 A (HINO MOTORS LTD), 8. Mai 1991 (1991-05-08)

## Beschreibung

Die Erfindung betrifft ein Kupplungssystem nach den Oberbegriff des Anspruchs 1. Ein solches Kupplungsystem ist aus US-A-5,577,588 bekannt.

Derartige Kupplungssysteme sind in diversen Ausgestaltungen bekannt. Es wird beispielsweise an ein Kupplungssystem mit einer Kupplungseinrichtung gedacht, die eine oder mehrere nasslaufende Kupplungsanordnungen aufweist (beispielsweise zwei nasslaufende Lamellen-Kupplungsanordnungen im Falle einer Doppel-Kupplungseinrichtung), deren übertragbares Moment über einen hydraulischen Druck (das Druckniveau) eingestellt wird. Für ein feinfühliges Ein- und Auskuppeln muss der Druck kontinuierlich über einen von der Kupplungskonstruktion abhängigen Druckbereich einstellbar sein. Derartige Kupplungsanordnungen sind in der Regel mit einem in die Kupplungsanordnung integrierten Nehmerzylinder ausgeführt, der im Betrieb mit der Kupplungsanordnung rotiert. Die Hydraulikmedium-Bereitstelleinrichtung ist in der Regel außerhalb der Kupplungseinrichtung stationär angeordnet. In diesem Fall steht der hydraulische Nehmerzylinder mit der Hydraulikmedium-Bereitstelleinrichtung über eine in der Regel leckagebehaftete Drehdurchführung oder Drehverbindung in Verbindung. Im Falle der leckagebehafteten Drehdurchführung oder Drehverbindung ist das Hydrauliksystem nicht völlig abgeschlossen, so dass ständig Hydraulikmedium nachgefördert werden muss, um einen bestimmten Druck zu halten. Ohne spezielle Maßnahmen können dann keine im Falle von Trockenkupptungen regelmäßig verwendeten hydraulischen Geberzylinder als Hydraulikmedium-Bereitstelleinrichtung eingesetzt werden.

Bei bekannten derartigen Kupplungssystemen wird ein Hydraulikmediumspeicher über eine Hydraulikpumpe bedarfsorientiert gefüllt. Zur Einstellung des Druckniveaus wird mit Hilfe einer Proportionalventilanordnung Hydraulikmedium aus dem Speicher entnommen und der Kupplungseinrichtung zugeführt.

Ferner ist es an sich im Zusammenhang mit den Kupplungen eines Automatikgetriebes bekannt, dass eine Hydraulikpumpe fortwährend betrieben wird. Um ein den Betätigungszustand an der jeweiligen Kupplung bestimmendes Druckniveau einzustellen, wird über ein Ventil gesteuert, wieviel des von der Pumpe geförderten Volumens zurück in ein Reservoir geleitet wird bzw. wieviel des geförderten Volumens der jeweiligen Kupplung zugeführt wird.

Beiden bekannten Lösungen ist gemeinsam, dass recht große Hydraulikmediumverluste auftreten und damit der Wirkungsgrad recht schlecht ist. Im Falle der ersten Lösung tritt ein recht großer Steuerölverlust an bzw. in der Proportionalventilanordnung auf. Diese Steuerölverluste sind deshalb besonders groß, weil zum Erreichen einer feinfühligen Regelung/Steuerung und zur Vermeidung eines Zusetzens des Steuerspalts eine Ventilelementanordnung der Proportionalventilanordnung mit einem Dither beaufschlagt wird, die Ventilanordnung also um eine Soll-Stellung in Schwingungen versetzt wird, die zu großen Leckageverlusten führen. Überdies ist der Kostenaufwand für eine gemäß der ersten Lösung ausgeführten Hydraulikmedium-Bereitstelleinrichtung mit Pump-, Speicher- und Ventilanordnung relativ groß, wobei insbesondere die Kosten für die Ventilanordnung zu Buche schlagen. Bei der zweiten Lösung ist der Wirkungsgrad sogar noch schlechter, da ständig von dem permanent geförderten Volumen das momentan nicht benötigte wieder zum Reservoir zurückfließt.

Weiterhin ist ein automatisiertes Doppelkupplungssystem bekannt, z.B. DE 100 34 745 A1, welches einen elektromechanischen Aktuator als Teil einer Betätigungsvorrichtung einer Doppelkupplung offenbart. Hierbei ist der Aktuator mit zwei separat ansteuerbaren Elektromotoren, welchen jeweils ein Getriebe zugeordnet ist, ausgestaltet, mittels welchen Ausrückhebel der Doppelkupplung unabhängig voneinander betätigt werden können. Bei dieser elektromechanischen Ausgestaltung der Betätigungsvorrichtung kann auf eine hydraulische Steuerung mit Hydraulikpumpen, Hydraulikspeichem und einem hydraulischen Steuerblock mit Ventilen komplett verzichtet werden, da als einzige hydraulische Bauteile zwei in sich geschlossene Hydraulikverbindungen zwischen dem Aktuator und der Kupplunseinrichtung zur Übertragung von Ausrückbewegungungen auf die Kupplungsausrückhebel, verwendet werden.

Demgegenüber schlägt die Erfindung ein Kupplungssystem nach Anspruch 1 vor.

Gemäß dem Erfindungsvorschlag wird in Abweichung von den bekannten Lösungen das Druckniveau und damit der Betätigungszustand der Kupplungseinrichtung direkt vermittels der Hydraulikmedium-Pumpenanordnung eingestellt (ggf. gesteuert oder geregelt). Eingesetzt wird hierzu eine hinsichtlich des Abgabedrucks oder/und der Fördermenge oder/und der Förderrichtung beeinflussbare, insbesondere steuerbare oder/und regelbare oder/und ggf. verstellbare Hydraulikmedium-Pumpenanordnung. Diese Beeinflussbarkeit der Pumpenanordnung im genannten Sinne wird nach der Erfindung für die Einstellung des Druckniveaus und damit des Betätigungszustands ausgenutzt, ohne dass es einer das Druckniveau einstellenden Ventilanordnung bedarf.

Der Erfindungsvorschlag ist sicherlich dahingehend überraschend, dass von dem sonst in der Regel befolgten Grundsatz abgewichen wird, das Pumpen und dergleichen zur Verschleißminderung vorzugsweise dauernd laufen, und zwar am Besten bei konstantem Fördervolumenstrom (ggf. bei konstanter Drehzahl). Die Erfinder haben demgegenüber erkannt, dass ein möglicherweise etwas größerer Verschleiß gegenüber den Vorteilen einer erfindungsgemäßen Bereitstelleinrichtung, nämlich dem deutlich besseren Wirkungsgrad, nicht ins Gewicht fällt. Dies gilt selbst dann, wenn das Hydrauliksystem im Wesentlichen leckagefrei ist und das Fördervolumen der Pumpenanordnung zum Halten der Kupplungseinrichtung in einem bestimmten Kupplungszustand tatsächlich auf 0 (Null) zu reduzieren ist. Eine bauartbedingte Leckage etwa einer Drehdurchführung/Drehverbindung oder/und ein gewünschtenfalls vorgesehenes Soll-Leck können aber durchaus vorteilhaft sein, um einen Dauerbetrieb der Pumpenanordnung zumindest mit einem relativ kleinen Mindest-Fördervolumen vorzusehen, damit der Verschleiß der Pumpenanordnung reduziert oder/und eine Ansprechgeschwindigkeit der Pumpenanordnung erhöht wird.

Der Erfindungsvorschlag ermöglicht, dass die Hydraulikmedium-Pumpenanordnung über eine Hydraulikmediumverbindung am Nehmerzylinder angeschlossen ist, die keine das Druckniveau einstellende Steuer/Regel-Ventilanordnung enthält. Es können also die nicht unerheblichen Kosten für ein zur Kupplungsansteuerung geeignetes Proportionalventil oder dergleichen eingespart werden.

Als besonders bevorzugt wird vorgeschlagen, dass die Kupplungseinrichtung unter Vermittlung des Nehmerzylinders über die Hydraulikmedium-Pumpenanordnung abhängig von einer einen Soll-Betätigungszustand der Kupplungseinrichtung repräsentierenden Führungsgröße und einer einen ist-Betätigungszustand der Kupplungseinrichtung repräsentierenden Ist-Größe betätigbar ist. Beispielsweise kann die Hydraulikmedium-Pumpenanordnung in Abhängigkeit von einer der Führungsgröße und der Ist-Größe zugeordneten Differenzgröße hinsichtlich ihres Abgabedrucks oder/und ihrer Fördermenge oder/und ihrer Förderrichtung beeinflussbar sein.

Bei der Führungsgröße, der Ist-Größe und ggf. der Differenzgröße kann es sich beispielsweise jeweils um eine hydraulische, mechanische oder elektrische Größe, insbesondere ein Druck, ein Volumen, eine Kraft, ein Weg, ein Strom oder eine Spannung handeln. Es ist nicht erforderlich, dass die Führungsgröße, die Ist-Größe und ggf. die Differenzgröße gleichartig sind; es ist beispielsweise möglich, dass die Ist-Größe ein Hydraulikdruck und die Führungsgröße eine elektrische Größe ist.

Zur Realisierung der angesprochenen Betätigbarkeit der Hydraulikmedium-Pumpenanordung ist vorzugsweise eine Betätigungsregeleinrichtung vorgesehen, die die Hydraulikmedium-Pumpenanordnung in wenigstens einem Betriebszustand des Kupplungssystems auf Grundlage der Führungsgröße und der Ist-Größe regelt, um die Kupplungseinrichtung zumindest teilweise einzukuppeln oder zumindest teilweise auszukuppeln oder einen Betätigungszustand der Kupplungseinrichtung zu halten.

Die Ist-Größe kann einen tatsächlichen Hrdraulikmediumdruck abgabeseitig der Hydraulikmedium-Pumpenanordnung, ggf. das momentane Druckniveau selbst, repräsentieren. Die Führungsgröße kann einen Soll-Hydraulikmediumdruck abgabeseitig der Hydraulikmedium-Pumpenanordnung, ggf. einen Sollwert für das Druckniveau repräsentieren. Allgemeiner gesprochen kann die Führungsgröße einen Sollzustand der Kupplungseinrichtung, ggf. eine Position eines Kolbens des hydraulischen Nehmerzylinders oder einen Einkuppel-/Auskuppel-/Schlupfzustand der Kupplungseinrichtung, repräsentieren.

Betreffend die Beeinflussbarkeit der Hydraulikmedium-Pumpenanordnung wird vorgeschlagen, dass diese wenigstens eine von einem Pumpenantrieb antreibbare Pumpe aufweist, deren Fördervolumenstrom hinsichtlich der Größe oder/und der Förderrichtung einstellbar ist durch entsprechende Ansteuerung des Pumpenantriebs oder/und durch Erstellen eines den Pumpenantrieb mit der Pumpe verbindenden Koppelmechanismus (ggf. in der Art eines Übertragungsgetriebes) oder/und durch Verstellen der Pumpe. Es kann also beispielsweise die Drehzahl bzw. die Hubzahl der Pumpe pro Zeiteinheit geändert werden, indem der Pumpenantrieb entsprechend angesteuert wird. Eine andere Möglichkeit ist, dass ein Kolbenhub oder dergleichen geändert wird, indem ein den Pumpenantrieb mit der Pumpe verbindender Koppelmechanismus verstellt wird. Eine weitere Möglichkeit ist, dass die Pumpe selbst verstellt wird, etwa hinsichtlich einer wirksamen Fördergeometrie oder/und hinsichtlich eines wirksamen Fördervolumens.

Vorzugsweise weist die Hydraulikmedium-Pumpenanordnung wenigstens eine als Verdrängermaschine oder hydrostatische Pumpe ausgeführte Pumpe, insbesondere eine als Umlaufverdrängermaschine oder Hubverdrängermaschine ausgeführte Pumpe, auf. Beispielsweise kann die Hydraulikmedium-Pumpenanordnung wenigstens eine Pumpe der von den Pumpentypen G-Rotor-Pumpe, Zahnpumpe (beispielsweise Zahnradpumpe, Außenzahnradpumpe, Innenzahnradpumpe, Zahnringpumpe), Schraubspindel oder Schraubenpumpe, Flügelpumpe (beispielsweise Flügelzellenpumpe, Drehflügelpumpe, Sperrschieberpumpe), Kolbenpumpe (beispielsweise Reihenkolbenpumpe, Radialkolbenpumpe, Axialkolbenpumpe) gebildeten Gruppe umfassen.

Als besonders bevorzugt wird vorgeschlagen, dass die Hydraulikmedium-Pumpenanordnung wenigstens eine Kolbenpumpe mit einer darin integrierten, wenigstens ein Kolbenelement der Kolbenpumpe einbeziehenden elektrischen Maschine aufweist, die elektrische Energie in mechanische Energie umwandelt, indem sie dem Kolbenelement eine Hubbewegung erteilt. Hierzu kann das Kolbenelement zumindest teilweise aus magnetischem oder magnetisierbarem Werkstoff gefertigt sein oder einen Wechselwirkungsabschnitt aus magnetischem oder magnetisierbarem Werkstoff aufweisen. Ein das Kolbenelement enthaltendes Gehäuse kann eine bestrombare Magnetspulenanordnung aufweisen, die zum Erzeugen eines dem Kolbenelement unter Vermittlung des magnetischen oder magnetisierbaren Werkstoffs eine Hubbewegung erteilenden Magnetfelds dient.

In der Regel wird es zweckmäßig sein, dass man abgabeseitig bzw. kupplungsseitig der Hydraulikmedium-Pumpenanordnung eine Ventilanordnung vorsieht, mittels der der abgabeseitigen bzw. kupplungsseitigen Hydraulikdruck oder/und das Druckniveau begrenzbar ist oder/und mittels der das Druckniveau im Bedarfsfall reduzierbar ist. Hierzu kann die Ventilanordnung wenigstens ein Druckbegrenzungsventil aufweisen, das dazu dient, einen Anstieg des Drucks über einen Maximalwert zu verhindern und so Beschädigungen des Hydrauliksystems zu vermeiden. Ferner kann die Ventilanordnung wenigstens ein Druckreduzierventil aufweisen, das beispielsweise als Notoder Schnell-Druckreduzierventil im Bedarfsfall, etwa wenn ein schnelles Einoder Auskuppeln erforderlich ist, das Druckniveau durch Ablassen von Hydraulikmedium reduziert. Es ist durchaus nicht ausgeschlossen, dass jegliche Reduzierung des Druckniveaus etwa zum Ein- oder Auskuppeln unter Vermittlung der Ventilanordnung, insbesondere des Druckreduzierventils, erfolgt.

Gegenüber der letztgenannten Ausgestaltung des Kupplungssystems ist es aber bevorzugt, das die Hydraulikmedium-Pumpenanordnung wenigstens eine Pumpe aufweist, mittels der durch Abführen von Hydraulikmedium das Druckniveau im Bedarfsfall reduzierbar ist. Es kann also beispielsweise vorgesehen sein, dass etwa zum Ein- oder Auskuppeln im Normalfall das Druckniveau unter Vermittlung der genannten Pumpe reduziert wird und ein ggf. vorhandenes Druckreduzierventil nur zur besonders schnellen Druckreduzierung in bestimmten Situationen eingesetzt wird.

Allgemein gesprochen kann die Hydraulikmedium-Pumpenanordnung wenigstens eine Pumpe zum Aufbauen bzw. Vergrößern des Druckniveaus und wenigstens eine Pumpe zum Abbauen bzw. Reduzieren des Druckniveaus aufweisen. Beispielsweise kann zum Abführen von Hydraulikmedium eine speziell hierfür vorgesehene Pumpe vorhanden sein. Demgegenüber ist es aber bevorzugt, dass die Hydraulikmedium-Pumpenanordnung wenigstens eine Pumpe aufweist, die mit wechselnder Förderrichtung betreibbar ist und damit sowohl zum Aufbau und zum Abbau des Druckniveaus verwendet werden kann.

Generell wird es zweckmäßig sein, einen den abgabeseitigen bzw. kupplungsseitigen Druck oder/und das Druckniveau vergleichmäßigenden Druckdämpfer vorzusehen, der beispielsweise in der Art eines Druckspeichers ausgeführt ist.

Das Hydrauliksystem kann wenigstens eine Leckagestelle in einer Hydraulikverbindung zwischen der Hydraulik-Pumpenanordnung und dem Nehmerzylinder aufweisen. Wie oben schon angesprochen, kann es sich um eine bauartbedingte Leckagestelle einer Drehverbindung oder dergleichen oder um eine Soll-Leckagestelle zum Vorsehen eines ständigen Mindest-Druckmediumflusses handeln.

Die Erfindungsvorschläge sind prinzipiell unabhängig von der Bauart der hydraulisch betätigbaren Kupplungseinrichtung. Es wird aber speziell daran gedacht, dass die Kupplungseinrichtung als Doppel-Kupplungseinrichtung oder Mehrfach-Kupplungseinrichtung ausgeführt ist, die wenigstens einen einer ersten Kupplungsanordung zugeordneten ersten Nehmerzylinder und wenigstens einen einer zweiten Kupplungsanordnung zugeordneten zweiten Nehmerzylinder aufweist. Hierzu wird als besonders bevorzugt vorgeschlagen, dass dem ersten und dem zweiten Nehmerzylinder jeweils eine eigene Hydraulikmedium-Pumpenanordnung zugeordnet ist, die unabhängig von der jeweils anderen Hydraulikmedium-Pumpenanordnung hinsichtlich des Abgabedrucks oder/und der Fördermenge oder/und der Förderrichtung beeinflussbar und dafür angeordnet und eingerichtet ist, dass durch Beeinflussung der jeweiligen Hydraulikmedium-Pumpenanordnung ein den Betätigungszustand der ersten bzw. zweiten Kupplungsanordnung bestimmendes Druckniveau und damit der Betätigungszustand der betreffenden Kupplungsanordnung einstellbar ist. Auf die beiden Kupplungsanordnungen und deren Hydraulikmedium-Pumpenanordnungen sind die oben genannten Weiterbildungen des erfindungsgemäßen Kupplungssystems unmittelbar anwendbar.

Zur Mehrfach-Kupplungseinrichtung bzw. Doppel-Kupplungseinrichtung ist noch der Vollständigkeit halber zu erwähnen, dass die erste Kupplungsanordnung einer ersten Getriebeeingangswelle und die zweite Kupplungsanordnung einer zweiten Getriebeeingangswelle eines Lastschaltgetriebes zugeordnet sein kann.

Die Erfindung wird im Folgenden anhand von in den Figuren gezeigten Ausführungsbeispielen näher erläutert.
- Fig. 1: zeigt schematisch zwei hydraulische Nehmerzylinder eines Kupplungssystems samt einer erfindungsgemäßen Hydraulikmedium-Bereitstelleinrichtung, die zwei HydraulikmediumPumpen umfasst.
- Fig. 2: zeigt zwei Alternativen für ein Detail II des Hydrauliksystems der Fig. 1.
- Fig. 3: zeigt in einer schematischen Darstellung ein Ausführungsbeispiel eines erfindungsgemäßen Kupplungssystems mit einer hydraulisch betätigbaren Doppelkupplung.
- Fig. 4: zeigt ein Ausführungsbeispiel für eine Magnetförderpumpe, die als Hydraulikmedium-Pumpe in einem erfindungsgemäßen Kupplungssystem als "Druckaufbaupumpe" einsetzbar ist
- Fig. 5: zeigt ein Ausführungsbeispiel für eine Magnetförderpumpe, die als Hydraulikmedium-Pumpe in einem erfindungsgemäßen Kupplungssystem als "Druckabbaupumpe" einsetzbar ist.
- Fig. 6: zeigt in einer teilgeschnittenen Darstellung eine in einem Antriebsstrang eines Kraftfahrzeugs zwischen einem Getriebe oder Antriebseinheit angeordnete Doppelkupplung mit zwei Lamellen-Kupplungsanordnungen, die Bestandteil eines erfindungsgemäßen Kupplungssystems sein könnte, etwa des Kpplungssystems der Fig. 3.

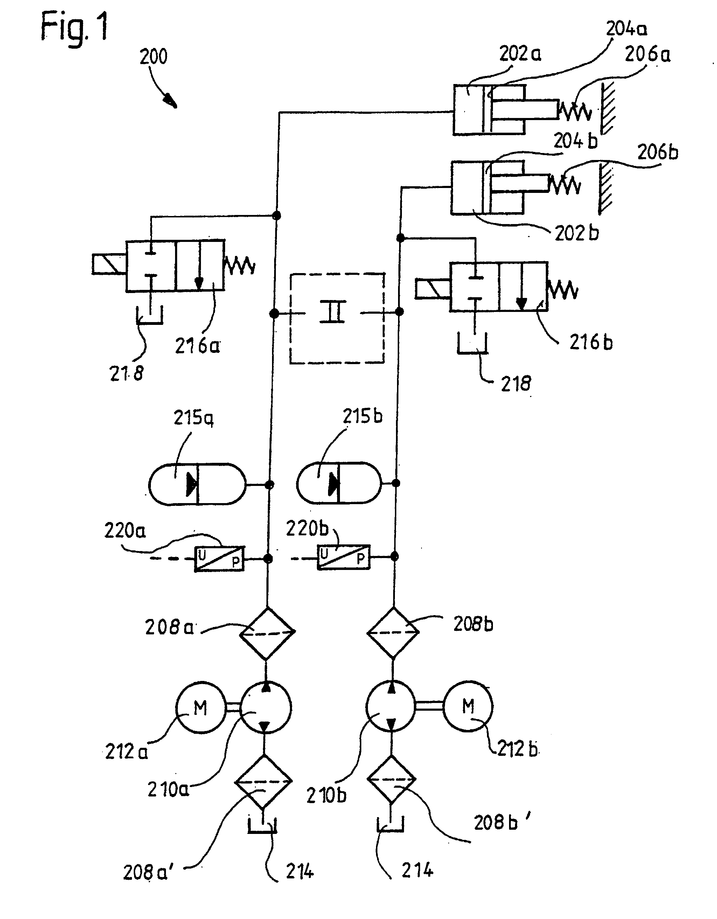

Fig. 1 zeigt eine Betätigungseinrichtung 200 für die Betätigung einer Kraftfahrzeug-Reibungskupplung (nicht im Einzelnen dargestellt) vermittels wenigstens eines hydraulischen Nehmerzylinders, der einen Betätigungskolben aufweist. Im Beispielsfall sind zwei hydraulische Nehmerzylinder 202a und 202b vorgesehen, die jeweils einen Betätigungskolben 204a bzw. 204b aufweisen. Die Art und Weise, wie der Betätigungskolben mit zugeordneten Kupplungskomponenten zusammenwirkt, ist im Zusammenhang mit der vorliegenden Erfindung ohne oder von geringem Interesse. Es kann sich bei der Kupplung um eine Kupplung des NORMALERWEISE-OFFEN-Typs oder des NORMALERWEISE-GESCHLOSSEN-Typs handeln. Eine jeweilige Rückstellfederanordnung ist bei 206a bzw. 206b symbolhaft angedeutet, die im Falle einer Kupplung des NORMALERWEISE-OFFEN-Typs die Kupplung ausrückt bzw. im Falle einer Kupplung des NORMALERWEISE-GESCHLOSSEN-Typs die Kupplung einrückt.

Die hydraulischen Nehmerzylinder 202a und 202b sind über einen jeweiligen Ölfilter 208a bzw. 208b an einer jeweiligen Hydraulikpumpe 210a bzw. 210b angeschlossen, die von einem Motor 212a bzw. 212b (beispielsweise einem Elektromotor) angetrieben wird und Hydraulikdrucköl bereitstellt. Hierzu saugt die Hydraulikpumpe 210a bzw. 210b Hydrauliköl aus einem jeweiligen bzw. einem gemeinsamen Reservoir 214 an. Es kann ein beispielsweise in der Art eines Hydrospeichers ausgebildeter Dämpfer (Pulsationsdämpfer) 215a bzw. 215b vorgesehen sein, der Druck/VolumenSpitzen bzw. -Schwankungen dämpft.

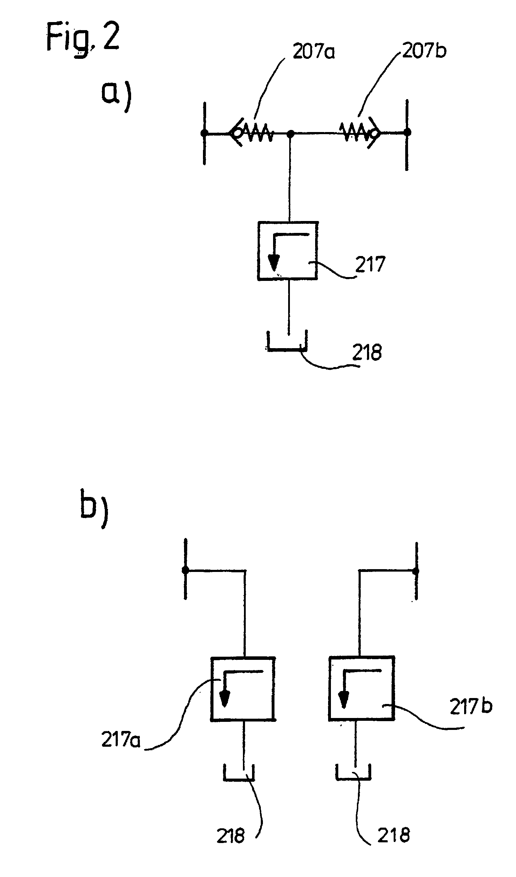

Die beiden Pumpen sind jeweils in Abhängigkeit von einem mittels eines Drucksensors 220a bzw. 220b erfassten abgabeseitigen Hydrauliköldrucks steuer- oder regelbar, und zwar hinsichtlich ihres Fördervolumens oder/und hinsichtlich ihres Abgabe-Drucks oder/und hinsichtlich ihrer Förderrichtung. So kann beispielsweise durch eine Förderrichtungsumkehr wahlweise der abgabeseitige Hydrauliköldruck aufgebaut (vergrößert) bzw. abgebaut (reduziert) werden, um unter Vermittlung eines jeweiligen hydraulischen Nehmerzylinders 202a bzw. 202b eine zugeordnete Kupplungsanordnung der Reibungskupplung einzurücken oder auszurücken. Der Druckabbau kann alternativ oder - etwa zum besonders schnellen Druckabbau - zusätzlich unter Vermittlung eines Abführventils 216a bzw. 216b erfolgen, das an einem Reservoir 218 angeschlossen ist. Die Reservoire 214, 218 können von einem gemeinsamen Reservoir (Ösumpf) gebildet sein. Ferner kann wenigstens ein Druckbegrenzungsventil vorgesehen sein, um Überdrucke im Hydrauliksystem abgabeseitig der Pumpen zu verhindern. Hierzu kann das Detail II in Fig. 1 beispielsweise entsprechend Fig. 2a oder entsprechend Fig. 2b ausgebildet sein. Im Falle der Fig. 2a ist ein an beiden Hydraulikteilsystemen abgabeseitig der Pumpe 210a bzw. der Pumpe 210b über ein jeweiliges Rückschlagventil 207a bzw. 207b angeschlossenes Druckbegrenzungsventil 217 vorgesehen, wohingegen gemäß Fig. 2b zwei gesonderte, jeweils einem der beiden Hydraulikteilsyteme zugeordnete Druckbegrenzungsventile 217a und 217b vorgesehen sind.

Die Anordnung gemäß Fig. 1 realisiert den Erfindungsgedanken, dass eine Reibungskupplung über eine Pumpe direkt, also ohne Proportionalventilanordnung oder allgemein ohne Steuerventilanordnung, angesteuert wird. Zur Einstellung des Kupplungsbetätigungsdrucks kann insbesondere der Fördervolumenstrom der Pumpe verändert werden. Weist die Kupplung nicht nur eine Kupplungsanordnung, sondern mehrere, beispielsweise zwei Kupplungsanordnungen (man spricht in diesem Zusammenhang von einer Doppelkupplung) auf, so wird jede Kupplungsanordnung vorzugsweise über eine eigene Pumpe angesteuert, um beide Kupplungsanordnungen völlig unabhängig voneinander betätigen zu können. Wie schon erwähnt, kann ein Elektromotor als Pumpenantrieb verwendet werden, der eine besonders einfache und feinfühlige Kupplungsbetätigung vermittels der jeweiligen Pumpe ermöglicht.

Gemäß Fig. 1 sind Drucksensoren 220a, 220b vorgesehen, die eine besonders genaue Regelung der Kupplungsbetätigung ermöglichen. Im Falle eines elektrischen Pumpenantriebs ist es aber auch denkbar, von dem vom Pumpenantrieb aufgenommenen elektrischen Strom auf den Förderdruck und damit den Kupplungsbetätigungsdruck zurückzuschließen. Auf diese Weise kann eine besonders kostengünstige Regelanordnung realisiert werden.

Wie schon angedeutet, wird die Kupplungsbetätigung vorzugsweise geregelt. D.h., es wird etwa von einer Kraftfahrzeugsteuereinheit eine Führungsgröße vorgegeben, die von einer Regelanordnung mit einer Ist-Größe, etwa dem vom Sensor 220a bzw. Sensor 220b aufgenommenen Druck, verglichen wird, beispielsweise indem eine Differenzgröße gebildet wird, auf deren Grundlage dann die Pumpe 210a bzw. 210b beeinflusst (angesteuert bzw. verstellt) oder/und deren Motor 212a bzw. 212b angesteuert wird. Es ist ferner auch möglich, eine den Motor mit der jeweiligen Pumpe koppelnde Koppelmechanik in Abhängigkeit von dem Vergleich zwischen Führungsgröße und Ist-Größe zu verstellen, etwa um einen Pumpenhub zu verändern.

Zu den Filtern 208a und 208b ist noch zu sagen, dass diese zusätzlich oder alternativ auch vor der jeweiligen Pumpe, also zwischen Reservoir und Pumpe, angeordnet sein könnten (Filter 208a' bzw. 208b') und insbesondere dazu dienen, das Hydrauliksystem vor Spänen, Schmutzpartikeln und dergleichen zu schützen.

Die Erfindung ist nicht auf spezielle Pumpentypen bezogen. Grundsätzlich kommen jegliche Pumpentypen und Pumpenwirkungsprinzipien für die von den Pumpen 210 und 210b gebildete Hydraulikmedium-Pumpenanordnung in Betracht. Beispiele von besonders geeigneten Pumpen sind sogenannte G-Rotor-Pumpen, Zahnradpumpen, Kolbenpumpen, Flügelzellenpumpen und andere Verdrängerpumpen. Bei derartigen Pumpen kann es zu Volumenstromschwankungen und dadurch zu Druckschwankungen im Hydrauliksystem kommen, so dass es besonders zweckmäßig ist, Pulsationsdämpfer etwa entsprechend den Dämpfern 215a und 215b vorzusehen. Um zu verhindern, dass es etwa im Falle einer Fehlfunktion der Regelkreise zu einer Beschädigung des Hydrauliksystems bzw. der Kupplung kommt, sollte auf wenigstens ein Druckbegrenzungsventil etwa entsprechend den Ventilanordnungen 217 und 217a, 217b in der Regel nicht verzichtet werden.

Weist das Hydrauliksystem wenigstens eine Leckagestelle auf, beispielsweise in einer Drehverbindung zwischen der jeweiligen Pumpe und dem jeweiligen Nehmerzylinder, so nimmt das abgabeseitig der jeweiligen Pumpe herrschende Druckniveau dann ab, wenn die Leckage größer ist als der von der Pumpe geförderte Volumenstrom. Grundsätzlich ist es denkbar, dass man etwa zum Einkuppeln im Falle einer Kupplung des NORMALERWEISE-GESCHLOSSEN-Typs bzw. zum Auskuppeln im Falle einer NORMA-LERWEISE-OFFEN-Kupplung einfach die jeweilige Hydraulikölpumpe anhält oder das Fördervolumen der Pumpe auf einen Mindestwert reduziert und dann das Druckniveau alleine vermittels der Leckage auf den gewünschten Wert abfallen lässt. In der Regel wird man aber zur Erreichung eines besonders hohen Wirkungsgrades keine Leckage oder nur eine geringe, ggf. bauartbedingte Leckage vorsehen, so dass der durch die Leckage erreichbare Druckabbau in der Regel nicht schnell genug erfolgen dürfte. Um einen schnelleren Druckabbau zu erreichen, kann man dann beispielsweise die Förderrichtung der jeweiligen Pumpe umkehren, so dass diese Hydrauliköl aus dem nehmerzylinderseitigen Teil des Hydrauliksystems abzieht. Die Förderrichtungsumkehr kann beispielsweise durch Umkehr der Drehrichtung des die Pumpe antreibenden Motors oder durch Verstellung der eine Rückförderung erlaubenden Pumpe selbst erfolgen. Alternativ oder - für besonders schnelle Druckreduzierung - kann ferner eine Druckreduzierventilanordnung oder Notöffnungsventilanordnung vorgesehen sein, beispielsweise entsprechend den Ventilen 216a und 216b.

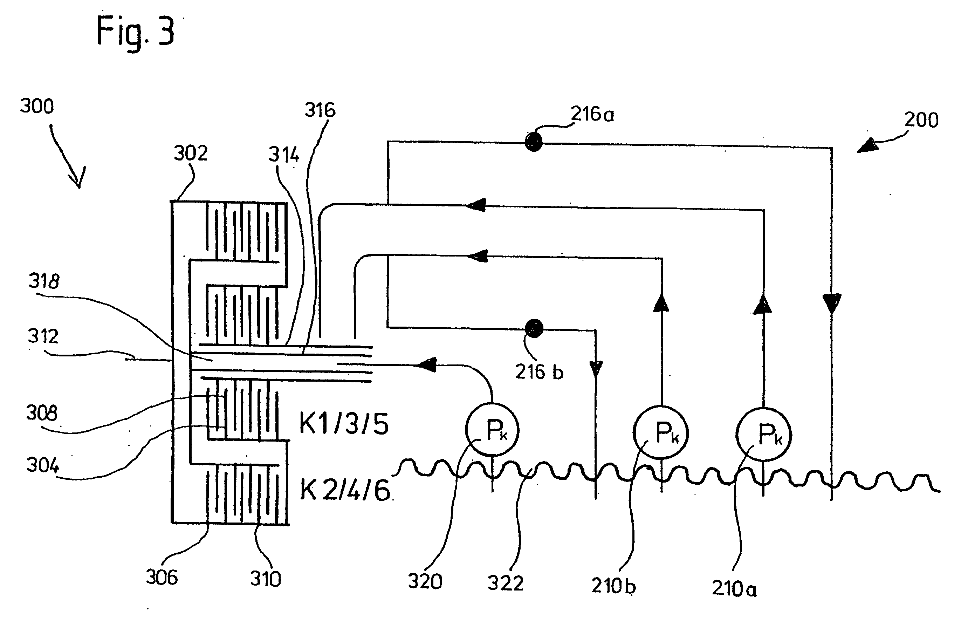

Fig. 3 zeigt ein Beispiel eines erfindungsgemäßen Kupplungssystems 300 mit einer Doppelkupplung 302, die eine radial innere Kupplungsanordnung 304 und eine radial äußere Kupplungsanordnung 306 aufweist. Die beiden Kupplungsanordnungen sind jeweils nur durch ein schematisch angedeutetes Lamellenpaket 308 bzw. 310 repräsentiert und dienen dazu, auf an sich bekannte Art und Weise eine Motorabtriebswelle 312 oder dergleichen mit einer zugeordneten Getriebeeingangswelle 314 bzw. 316 eines Lastschaltgetriebes oder dergleichen zur Momentenübertragung zu verbinden. Die radial innere Kupplungsanordnung 304 ist beispielsweise den Getriebegängen 1, 3 und 5 und die radial äußere Kupplungsanordnung 306 ist beispielsweise den Getriebegängen 2, 4 und 6 zugeordnet. Die Getriebeeingangsweilen 314 und 316 sind als koaxial geschachtelte Hohlwellen ausgeführt. Über einen darin ausgebildeten Ölkanal 318 kann mittels einer Kühlölpumpe 320 Kühlöl aus einem Ölsumpf 322 den Lamellenpaketen 308 und 310 zugeführt werden.

In die Doppelkupplung 302 sind zwei hydraulische Nehmerzylinder integriert, die jeweils einen einem der beiden Lamellenpakete zugeordneten Betätigungskolben aufweisen und dazu dienen, das jeweilige Lamellenpaket gegen die Wirkung einer auf den Kolben wirkenden Rückstellfederanordnung einzuspannen (Kupplungsanordnung des NORMALERWEISE-OFFEN-Typs) oder das Lamellenpaket von der einspannenden Einwirkung einer Einkuppelfederanordnung zum Auskuppeln zu entlasten (Kupplungsanordnung des NORMALERWEISE-GESCHLOSSEN-Typs).

Dem hydraulischen Nehmerzylinder der radial äußeren Kupplungsanordnung 306 sind eine Druckölpumpe 210a und ein Abführventil 216a zugeordnet, die über eine Ölleitungsanordnung, eine nicht dargestellte Drehverbindung und einen in den geschachtelten Getriebeeingangswellen ausgebildeten Ölkanal an dem hydraulischen Nehmerzylinder angeschlossen sind. In entsprechender Weise ist dem hydraulischen Nehmerzylinder der radial inneren Kupplungsanordnung 304 eine Druckölpumpe 210b und ein Abführventil 216b zugeordnet, die über eine Ölieitungsanordnung, eine nicht dargestellte Drehverbindung und einen zwischen den geschachtelten Getriebeeingangswellen ausgebildeten Ölkanal am betreffenden hydraulischen Nehmerzylinder angeschlossen sind. Die Pumpen 210a und 210b dienen dazu, Öl aus dem Reservoir 322 anzusaugen und dem jeweiligen hydraulischen Nehmerzylinder als Drucköl 210 zuzuführen. Die Abführventile 216a und 216b dienen dazu, im Bedarfsfall Öl aus dem jeweiligen hydraulischen Nehmerzylinder zum Reservoir 322 abzulassen.

Die Kupplungsanordnungen werden entsprechend dem Ausführungsbeispiel der Fig. 1 unter Vermittlung der Pumpen 210a und 210b betätigt. Die Ansteuerung/Verstellung der Pumpen bzw. deren Antriebe bzw. der die Antriebe mit der eigentlichen Pumpe koppelnden Koppelmechaniken erfolgt vorteilhaft durch eine entsprechend ausgelegte, Steuer/Regel-Einheit (nicht dargestellt), die auf Grundlage eines Mikroprozessors realisiert sein kann, und beispielsweise die von Drucksensoren entsprechend den Sensoren 220a, 220b erfassten Hydraulikdrücke als Ist-Wert empfängt und mit Führungswerten vergleicht. Die Steuer/Regeleinheit steuert vorzugsweise auch die Ventile 216a und 216b an.

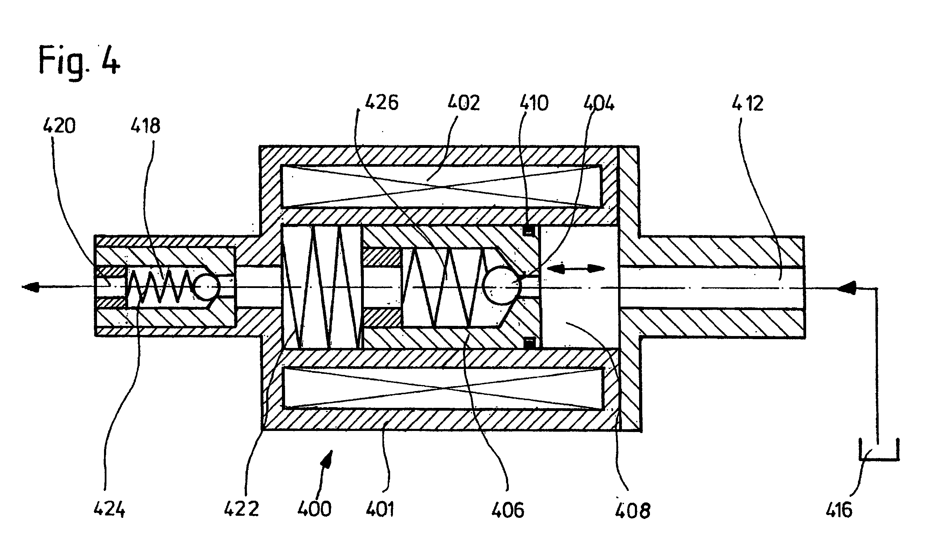

Ein Ausführungsbeispiel einer als Pumpe 210 bzw. 210b einsetzbaren Pumpe ist in Fig. 4 gezeigt. Die hier gezeigte Pumpe 400 kann als "Magnetförderpumpe" bezeichnet werden und hat gewisse Gemeinsamkeiten mit regelmäßig zur Kraftstoffversorgung in Kraftfahrzeugen verwendete Pumpen. Die Pumpe weist ein zylindrisches Gehäuse 401 auf, in dem eine elektrische Spule 402 angeordnet ist. Ein ein integriertes Rückschlagventil 404 aufweisender und zumindest teilweise aus magnetischem Material (an Stelle von permanent-magnetischem Material kann unter Umständen auch magnetisierbares Material verwendet werden) bestehender Kolben 406 ist in einer zylindrischen Pumpenkammer 408 verschiebbar gelagert und steht vermittels eines Dichtungsrings 410 mit einer die Kammer begrenzenden Innenumfangswand in Dichteingriff. Ein Ansauganschluss 412 dient zum Anschluss an einem Hydraulikölreservoir 416. Ein mit einem Rückschlagventil 418 ausgeführter Abgabeanschluss 420 dient zum Anschluss der Pumpe an einer mit Drucköl zu versorgenden Komponente, etwa einem hydraulischen Nehmerzylinder einer Reibungskupplung.

Wird die Spule 402 bestromt (im Falle eines zumindest teilweise aus permanent-magnetischem Material gebildeten Kolbens mit bestimmter Stromrichtung), erfährt der Kolben 406 eine den Kolben entgegen der Wirkung einer Rückstellfeder in Richtung zum Abgabeanschluss 420 verschiebende Kraft, also eine Kraft in Förderrichtung. Das Rückschlagventil 404 im Kolben ist geschlossen und das Rückschlagventil 418 im Abgabeanschluss 420 öffnet sich unter der Wirkung des aus der Kammer 408 in Richtung zum Anschluss verdrängten Hydrauliköls, so dass das verdrängte Hydrauliköl durch den Abgabeanschluss 420 in Richtung zum Nehmerzylinder abgegeben wird. Gleichzeitig wird Öl aus dem Reservoir 416 in die Kammer 408 angesaugt. Schaltet man den Spulenstrom aus, so wird der der Kolben 406 unter der Wirkung der Rückstellfeder 422 in entgegengesetzter Richtung, also in Richtung Ansauganschluss 412 bewegt. Unter der Wirkung des abgabeseitig der Pumpe herrschenden Drucks oder/und unter der Wirkung einer Schließfeder 424 schließt das Rückschlagventil 418 und das Ventil 404 im Kolben öffnet entgegen der Wirkung einer Schließfeder 426 auf Grund einer sich aufbauenden Druckdifferenz zwischen dem Kolbeninnenraum und dem reservoirseitigen Teil des Hydrauliksystems. Das in der Kammer 408 enthaltene Öl fließt dabei durch das Rückschlagventil 404 zur anderen Kolbenseite. Im Falle einer Ausbildung des Kolbens mit einer darin integrierten Permanent-Magnetanordnung kann die Stromflussrichtung durch die Spule 402 auch umgekehrt werden, um nach der Abgabehubbewegung des Kolbens 406 die Ansaughubbewegung auszulösen bzw. nach der Ansaughubbewegung des Kolbens die Abgabehubbewegung des Kolbens auszulösen. Auf die Rückstellfeder 422 kann dann eventuell verzichtet werden.

Eine Pumpe wie in Fig. 4 gezeigt erzeugt in der Regel ausgeprägte Druckpulsationen. Um diese zu reduzieren, könnte man mehrere Pumpen der in Fig. 4 gezeigten Art parallel schalten und mit gegeneinander versetzten Hubphasen betreiben. Wird die Pumpe der Fig. 4 als Pumpe 210a bzw. 210b eingesetzt, so sollten die Druckabbauventile 216a und 216b vorgesehen sein, wenn für eine schnelle Reduktion des Kupplungsdrucks gesorgt werden soll, da die Pumpe der Fig. 4 für eine Förderrichtung ausgebildet ist.

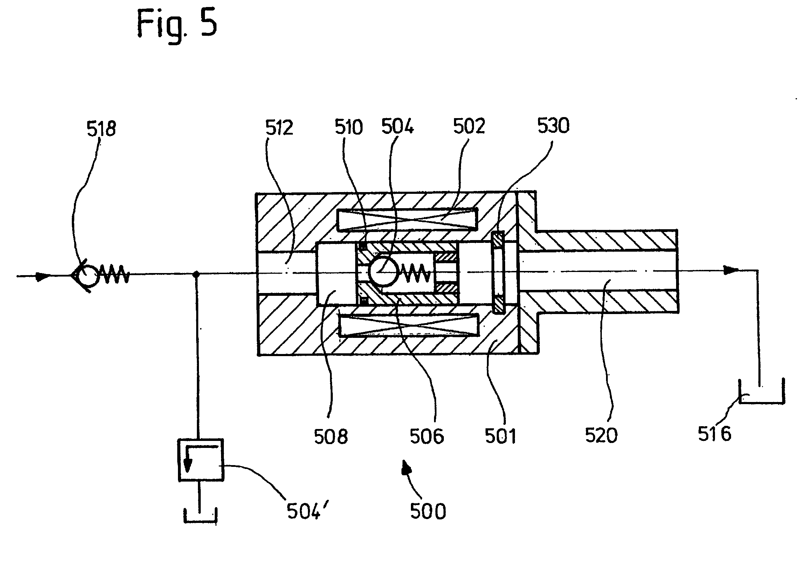

Alternativ oder zusätzlich zum Vorsehen der Druckabbauventile kann man auch eine in Fig. 5 gezeigte Druckabbaupumpe 500 vorsehen, die im Wesentlichen wie die Pumpe der Fig. 4 ausgeführt ist, aber anders im Hydrauliksystem angeordnet ist, nämlich dafür, dass sie Hydrauliköl aus dem nehmerzylinderseitigen Teil des Hydrauliksystems abzieht und zum Reservoir 416 fördert. Es werden. betreffend die Pumpe der Fig. 5 für analoge oder entsprechende Bauteile die gleichen Bezugszeichen, wie bei Fig. 4 verwendet, jeweils vermehrt um den Wert 100. Der Anschluss 512 ist über ein Rückschlagventil 518 am nehmerzylinderseitigen Teil des Hydrauliksystems angeschlossen. Der Abgabeanschluss 520 ist am Reservoir 516 angeschlossen. Die Hubbewegungen des zumindest teilweise aus magnetischem Material hergestellten bzw. mit einer permanenten Magnetanordnung ausgeführten Kolbens wird wie bei der Pumpe der Fig. 4 durch ein durch die Spule 502 erzeugtes magnetisches Feld erreicht, dass an- und abgeschaltet bzw. umgepolt wird. Zum Abziehen von Öl aus dem nehmerzylinderseitigen Teil des Hrdrauliksystems öffnet bei der Bewegung des Kolbens in Richtung zum Abgabeanschluss 520 das kupplungsseitige Rückschlagventil 518. Bei der Bewegung des Kolbens 506 in Gegenrichtung schließt das Rückschlagventil 518 und das in der Kammer 508 auf Seite des Anschlusses 512 enthaltene Öl wird durch das in den Kolben 504 integrierte Rückschlagventil 504 zur anderen Seite des Kolbens durchgelassen und beim nächsten Ansaughub zum Reservoir 516 gefördert. An Stelle des in den Kolben integrierten Rückschlagventils 504 und dem Anschluss 520 kann auch einfach ein Druckbegrenzungsventil 504' zwischen dem Rückschlagventil 518 und dem Anschluss 512 angeschlossen sein, dessen Schaltdruck etwas über dem maximalen Kupplungsbetätigungsdruck liegt. In diesem Fall kann als Kolben oder Anker ein geschlossener Kolben verwendet werden. Ein derartiges Druckbegrenzungsventil könnte auch direkt in den Kolben integriert sein.

Um eine Beschädigung des Pumpengehäuses 501 zu verhindern, kann ein ggf. ringförmiger Anschlag 530 für den Kolben vorgesehen sein, an dem der Kolben am Ende des Ansaughubs anschlägt. Ein entsprechender Anschlag kann auch bei der Pumpe der Fig. 4 vorgesehen sein.

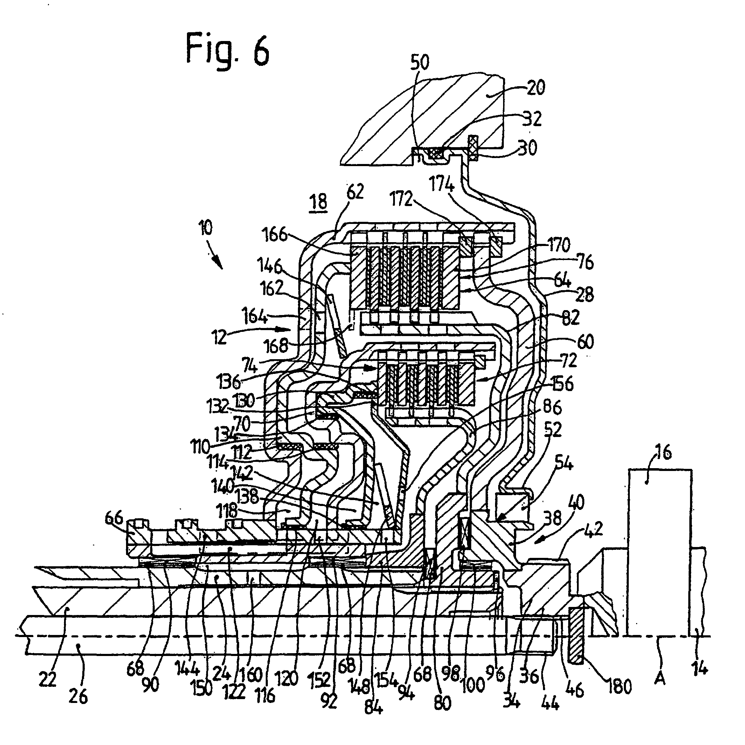

Ein Beispiel einer Mehrfach-Kupplungseinrichtung, die als Teil eines erfindungsgemäßen Kupplungssystems eingesetzt werden kann, wird im Folgenden anhand der Fig. 6 näher erläutert. Es handelt sich speziell um eine Doppel-Kupplungseinrichtung, kurz Doppelkupplung.

Fig. 6 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 6 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 6 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 6 nicht dargestellten Ölpumpe (etwa die Ölpumpe 320) dient, wie noch näher erläutert wird. Ist wenigstens eine elektromotorisch angetriebene Ölpumpe vorgesehen, kann unter Umständen auf die Pumpenantriebswelle verzichtet werden.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung wie das in Fig. 6 gezeigte Ausführungsbeispiel, nasslaufende Reibungskupplungen, beispielsweise Lamellenkupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 6 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierte Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungsoder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 6 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind, wie schon angedeutet, durch, das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamelienträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallager- als auch Radiallagerfunktion hat. Vom Letzteren wird in Bezug auf das Ausführungsbeispiel in Fig. 6 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer sich zu einer Achse A der Doppelkupplung 12 orthogonal erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72. angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer zugeordneten Hydraulikmedium-Pumpe (beispielsweise die Pumpe 210a), in Verbindung, wobei der Druckmediumskanal 122 über eine das Ringteil 66 aufnehmende, ggf. getriebefeste Anschlusshülse an der Pumpe angeschlossen ist. Die Anschlusshülse und das Ringteil 66 bilden eine Drehverbindung. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 6 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einer zugeordneten Hydraulikmedium-Pumpe (beispielsweise die Pumpe 210b) angeschlossen. Mittels der genannten Pumpen, die andererseits an einem Reservoir (etwa das Reservoir 322) angeschlossen sind, kann an den beiden Druckkammern 118 und 140 wahlweise (ggf. auch gleichzeitig) ein Betätigungsdruck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedem 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 12, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 132 im Fahrbetrieb mit der Kurbelwelle 14 mitdrehen, kommt es auch ohne Druckanlegung an den Druckkammern 118 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 6 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das ggf. von der Pumpe 320 bereitgestellte Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbetagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupptungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 80 und dem Ringabschnitt 38 der Kupplungsnabe 34 (durch die Lager 98 und 100) nach radial außen strömt.

Weitere Einzelheiten der Doppelkupplung 12 gemäß dem beschriebenen Ausführungsbeispiel sind für den Fachmann ohne weiteres aus Fig. 6 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74 am Außenlamellenträger 70 vorgesehen.

Betreffend weitere Einzelheiten und vorteilhafte Ausgestaltungen der Doppelkupplung 12 wird auf die deutschen Patentanmeldungen 199 55 365.3 (AT 17.11.1999); 100 04 179.5, 100 04 186.8, 100 04 184.1, 100 04 189.2, 100 04 190.6, 100 04 105.7 (alle AT 01.02.2000); 100 34 730.4 (AT 17.07.2000) verwiesen. Es wird hierzu darauf hingewiesen, dass Fig. 6 der vorliegenden Anmeldung der Fig. 1 dieser Anmeldungsserie entspricht.

## Patentansprüche

1. Kupplungssystem, umfassend eine Kupplungseinrichtung (302) insbesondere für die Anordnung in einem Antriebsstrang zwischen einer Antriebseinheit und einem Getriebe, sowie umfassend eine Betätigungseinrichtung (200) zur Betätigung der Kupplungseinrichtung auf hydraulischem Wege vermittels wenigstens eines hydraulischen Nehmerzylinders (202a, 202b) der Kupplungseinrichtung, wobei die Betätigungseinrichtung ein Hydrauliksystem mit einer Hydraulikmedium-Bereitstelleinrichtung (210a, 210b) zum Bereitstellen von Hydraulikmedium auf einem, einstellbaren, über den Nehmerzylinder den Betätigungszustand der Kupplungseinrichtung bestimmenden Druckniveau aufweist, wobei das Hydrauliksystem als ein, an ein Hydraulikreservoir angeschlossenes, offenes System ausgebildet ist, der Nehmerzylinder innerhalb der Kupplungseinrichtung, weiche wenigstens ein, mittels Hydraulikmedium des Hydrauliksystems gekühltes, Lamellenpaket aufweist, befindlich ist, die Hydraulikmedium-Bereitstellanordnung eine hinsichtlich eines Abgabe- Druckes oder/und einer Fördermenge oder/und einer Förderrichtung beeinflussbare Hydraulikmedium-Pumpenanordnung aufweist, **dadurch gekennzeichnet, dass** die Hydraulikmedium-Pumpenanordnung (210a, 210b) in direkter Wirkverbindung mit dem wenigstens einen Nehmerzylinder verbunden und so eingerichtet ist, dass durch Beeinflussung der Hydraulikmedium-Pumpenanordnung (210a, 21 0b) das Druckniveau und damit der Betätigungszustand direkt einstellbar ist.

2. Kupplungssystem nach Anspruch 1, **dadurch gekennzeichnet, dass** die Hydraulikmedium-Pumpenanordnung (210a, 210b) über eine Hydrautikmediumverbindung am Nehmerzylinder (202a, 202b) angeschossen ist, die keine das Druckniveau einstellende Steuer/Regel-Ventilanordnung enthält.

3. Kupplungssystem nach Anspruch 1 oder 2, **dadurch gekennzeichnet, dass** die Kupplungseinrichtung (302) unter Vermittlung des Nehmerzylinders (202a, 202b) über die Hydraulikmedium-Pumpenanordnung (210a, 210b) abhängig von einer einen Soll-Betätigungszustand der Kupplungseinrichtung repräsentierenden Führungsgröße und einer einen Ist-Betätigungszustand der Kupplungseinrichtung repräsentierenden Ist-Größe betätigbar ist.

4. Kupplungssystem nach Anspruch 3, **dadurch gekennzeichnet, dass** die Hydraulikmedium-Pumpenanordnung (210a, 210b) in Abhängigkeit von einer der Führungsgröße und der Ist-Größe zugeordneten Differenzgröße hinsichtlich ihres Abgabedrucks oder/und ihrer Fördermenge oder/und ihrer Förderrichtung beeinflußbar ist.

5. Kupplungssystem nach Anspruch 3 oder 4, **dadurch gekennzeichnet, dass** wenigstens eine der Größen - Führungsgröße, Ist-Größe und gegebenenfalls Differenzgröße - eine hydraulische, mechanische oder elektrische Größe, insbesondere ein Druck, ein Volumen, eine Kraft, ein Weg, ein Strom oder eine Spannung ist.

6. Kupplungssystem nach einem der Ansprüche 3 bis 5, **gekennzeichnet durch** eine Betätigungsregeleinrichtung, die die Hydraulikmedium-Pumpenanordnung (210a, 210b) in wenigstens einem Betriebszustand des Kupplungssystems auf Grundlage der Führungsgröße und der Ist-Größe regelt, um die Kupplungseinrichtung (302) zumindest teilweise einzukuppeln oder zumindest teilweise auszukuppeln oder einen Betätigungszustand der Kupplungseinrichtung zu halten.

7. Kupplungssystem nach einem der Ansprüche 3 bis 6, **dadurch gekennzeichnet, dass** die Ist-Größe einen tatsächlichen Hydrautikmediumdruck abgabeseitig der Hydraulikmedium-Pumpenanordnung (210a, 210b), gegebenenfalls das momentane Druckniveau selbst, repräsentiert.

8. Kupplungssystem nach einem der Ansprüche 3 bis 7, **dadurch gekennzeichnet, dass** die Führungsgröße einen Soll-Hydraulikmediumdruck abgabeseitig der Hydraulikmedium-Pumpenanordnung (210a, 210b), gegebenenfalls einen Sollwert für das Druckniveau, oder einen Sollzustand der Kupplungseinrichtung, gegebenenfalls eine Position eines Kolbens des hydraulischen Nehmerzylinders (202a, 202b) oder einen Einkuppel-/Auskuppel-/Schlupfzustand der Kupplungseinrichtung (302), repräsentiert.

9. Kupplungssystem nach einem der Ansprüche 1 bis 8, **dadurch gekennzeichnet, dass** die Hydraulikmedium-Pumpenanordnung wenigstens eine von einem Pumpenantrieb antreibbare Pumpe (210a, 210b) aufweist, deren Fördervolumenstrom hinsichtlich der Größe oder/und der Förderrichtung einstellbar ist durch entsprechende Ansteuerung des Pumpenantriebs (212a, 212b) oder/und durch Verstellen eines den Pumpenantrieb mit der Pumpe verbindenden Koppelmechanismus oder/und durch Verstellen der Pumpe.

10. Kupplungssystem nach einem der Ansprüche 1 bis 9, **dadurch gekennzeichnet, dass** die Hydraulikmedium-Pumpenanordnung (210a, 210b) wenigstens eine als Verdrängermaschine oder hydrostatische Pumpe ausgeführte Pumpe, insbesondere eine als Umlaufverdrängermaschine oder Hubverdrängermaschine ausgeführte Pumpe, aufweist.

11. Kupplungssystem nach einem der Ansprüche 1 bis 10, **dadurch gekennzeichnet, dass** die Hydraulikmedium-Pumpenanordnung (210, 210b) wenigstens eine Pumpe der von den Pumpentypen
G-Rotor-Pumpe, Zahnpumpe, Zahnradpumpe, Außenzahnradpumpe, Innenzahnradpumpe, Zahnringpumpe, Schraubspindelpumpe, Flügelpumpe, Flügelzellenpumpe, Drehflügelpumpe, Sperrschieberpumpe, Kolbenpumpe, Reihenkolbenpumpe, Radialkolbenpumpe, Axialkolbenpumpe
gebildeten Gruppe umfasst.

12. Kupplungssystem nach einem der Ansprüche 1 bis 11, **dadurch gekennzeichnet, dass** die Hydraulikmedium-Pumpenanordnung wenigstens eine Kolbenpumpe (400; 500) mit einer darin integrierten, wenigstens ein Kolbenelement (406; 506) der Kolbenpumpe einbeziehenden elektrischen Maschine aufweist, die elektrische Energie in mechanische Energie umwandelt, indem sie dem Kolbenelement eine Hubbewegung erteilt.

13. Kupplungssystem nach Anspruch 12, **dadurch gekennzeichnet, dass** das Kolbenelement (406; 506) zumindest teilweise aus magnetischem oder magnetisierbaren Werkstoff gefertigt ist oder einen Wechselwirkungsabschnitt aus magnetischem oder magnetisierbarem Werkstoff aufweist, und dass ein das Kolbenelement enthaltendes Gehäuse eine bestrombare Magnetsputenanordnung aufweist, die zum Erzeugen eines dem Kolbenelement unter Vermittlung des magnetischen oder magnetisierbaren Werkstoffs eine Hubbewegung erteilenden Magnetfelds dient.

14. Kupplungssystem nach einem der Ansprüche 1 bis 13, **dadurch gekennzeichnet, dass** eine kupplungsseitig der Hydraulikmedium-Pumpenanordnung angeordnete Ventilanordnung (216a, 216b; 217, 217a, 217b) vorgesehen ist, mittels der der kupplungsseitige Hydraulikdruck oder/und das Druckniveau begrenzbar oder/und das Druckniveau im Bedarfsfall reduzierbar ist.

15. Kupplungssystem nach einem der Ansprüche 1 bis 14, **dadurch gekennzeichnet, dass** die Hydraulikmedium-Pumpenanordnung wenigstens eine Pumpe (500) aufweist, mittels der durch Abführen von Hydraulikmedium das Druckniveau im Bedarfsfall reduzierbar ist.

16. Kupplungssystem nach Anspruch 15, **dadurch gekennzeichnet, dass** die Hydraulikmedium-Pumpenanordnung wenigstens eine Pumpe (400) zum Aufbauen bzw. Vergrößern des Druckniveaus und wenigstens eine Pumpe (500) zum Abbauen bzw. Reduzieren des Druckniveaus aufweist.

17. Kupplungssystem nach Anspruch 15 oder 16, **dadurch gekennzeichnet, dass** die Hydraulikmedium-Pumpenanordnung wenigstens eine Pumpe (210a, 210b) aufweist, die mit wechselnder Förderrichtung betreibbar ist.

18. Kupplungssystem nach einem der Ansprüche 1 bis 17, **gekennzeichnet durch** einen den kupplungsseitigen Druck oder/und das Druckniveau vergleichmäßigenden Druckdämpfer (215a, 215b), der vorzugsweise in der Art eines Druckspeichers ausgeführt ist.

19. Kupplungssystem nach einem der Ansprüche 1 bis 18, **gekennzeichnet durch** wenigstens eine Leckagestelle in einer Hydraulikverbindung zwischen der Hydraulik-Pumpenanordnung und dem Nehmerzylinder.

20. Kupplungssystem nach einem der Ansprüche 1 bis 19, **dadurch gekennzeichnet, dass** die Kupplungseinrichtung wenigstens einen einer ersten Kupplungsanordnung (304) zugeordneten ersten Nehmerzylinder (202b) und wenigstens einen einer zweiten Kupplungsanordnung (306) zugeordneten zweiten Nehmerzylinder (202a) aufweist, wobei vorzugsweise dem ersten und dem zweiten Nehmerzylinder jeweils eine eigene Hydraulikmedium-Pumpenanordnung (210b bzw. 210a) zugeordnet ist, die unabhängig von der jeweils anderen Hydraulikmedium-Pumpenanordnung hinsichtlich des Abgabedrucks oder/und der Fördermenge oder/und der Förderrichtung beeinflußbar und dafür angeordnet und eingerichtet ist, dass durch Beeinflussung der jeweiligen Hydraulikmedium-Pumpenanordnung ein den Betätigungszustand der ersten bzw. zweiten Kupplungsanordnung bestimmendes Druckniveau und damit der Betätigungszustand der betreffenden Kupplungsanordnung einstellbar ist.

21. Kupplungssystem nach Anspruch 20, **dadurch gekennzeichnet, dass** die erste Kupplungsanordnung (304) einer ersten Getriebeeingangswelle (314) und die zweite Kupplungsanordnung (306) einer zweiten Getriebeeingangswelle (316) eines Lastschaltgetriebes zugeordnet ist.

## Claims

1. Clutch system, comprising a clutch device (302), in particular for arrangement in a drive train between a drive unit and a transmission, and comprising an actuating device (200) for actuating the clutch device hydraulically by means of at least one hydraulic slave cylinder (202a, 202b) of the clutch device, the actuating device having a hydraulic system with a hydraulic-medium supply device (210a, 210b) for the supply of hydraulic medium at an adjustable pressure level determining the actuating state of the clutch device via the slave cylinder, the hydraulic system being designed as an open system connected to a hydraulic reservoir, the slave cylinder being located within the clutch device which has at least one disc stack cooled by means of hydraulic medium from the hydraulic system, and the hydraulic-medium supply device having a hydraulic-medium pump arrangement capable of being influenced with regard to a discharge pressure and/or a feed quantity and/or a feed direction, **characterized in that** the hydraulic-medium pump arranged (210a, 210b) is directly connected operatively to the at least one slave cylinder and is set up in such a way that, by the hydraulic-medium pump arrangement (210a, 210b) being influenced, the pressure level and consequently the actuating state can be adjusted directly.

2. Clutch system according to Claim 1, **characterized in that** the hydraulic-medium pump arrangement (210a, 210b) is connected to the slave cylinder (202a, 202b) via a hydraulic-medium connection which contains no control/regulating-valve arrangement adjusting the pressure level.

3. Clutch system according to Claim 1 or 2, **characterized in that** the clutch device (302) can be actuated by means of the slave cylinder (202a, 202b), via the hydraulic-medium pump arrangement (210a, 210b), as a function of a command variable representing a desired actuating state of the clutch device and of an actual-value variable representing an actual actuating state of the clutch device.

4. Clutch system according to Claim 3, **characterized in that** the hydraulic-medium pump arrangement (210a, 210b) can be influenced as a function of a differential variable with regard to its discharge pressure and/or its feed.quantity and/or its feed direction, the said differential variable being assigned to the command variable and to the actual-value variable.

5. Clutch system according to Claim 3 or 4, **characterized in that** at least one of the variables - command variable, actual-value variable and, if appropriate, differential variable - is a hydraulic, mechanical or electrical variable, in particular a pressure, a volume, a force, a travel, a current or a voltage.

6. Clutch system according to one of Claims 3 to 5, **characterized by** an actuation regulating device which regulates the hydraulic-medium pump arrangement (210a, 210b) in at least one operating state of the clutch system on the basis of the command variable and of the actual-value variable, in order at least partially to couple or at least partially to uncouple the clutch device (302) or to maintain an actuating state of the clutch device.

7. Clutch system according to one of Claims. 3 to 6, **characterized in that** the actual-value variable represents an actual hydraulic-medium pressure on the discharge side of the hydraulic-medium pump arrangement (210a, 210b), if appropriate the instantaneous pressure level itself.

8. Clutch system according to one of Claims 3 to 7, **characterized in that** the command variable represents a. desired hydraulic-medium pressure on the discharge side of the hydraulic-medium pump arrangement (210a, 210b), if appropriate a desired value for the pressure level, or a desired state of the clutch device, if appropriate a position of a piston of the hydraulic slave cylinder (202a, 202b), or a coupling/uncoupling/slip state of the clutch device (302).

9. Clutch system according to one of Claims 1 to 8, **characterized in that** the hydraulic-medium pump arrangement has at least one pump (210a, 210b) which is capable of being driven by a pump drive and the feed volume flow of which can be adjusted with regard to magnitude and/or feed direction by means of the corresponding activation of the pump drive (212a, 212b) and/or by means of the adjustment of a coupling mechanism connecting the pump drive to the pump and/or by means of the adjustment of the pump.

10. Clutch system according to one of Claims 1 to 9, **characterized in that** the hydraulic-medium pump arrangement (210a, 210b) has at least one pump designed as a positive-displacement machine or hydrostatic pump, in particular a pump designed as a rotary-type positive-displacement machine or a lift-type positive-displacement machine.

11. Clutch system according to one of Claims 1 to 10, **characterized in that** the hydraulic-medium pump arrangement (210, 210b) comprises at least one pump of the group formed by the pump types G-rotor pump, geared pump, gearwheel pump, external-gearwheel pump, internal-gearwheel pump, gear-ring pump, screw-spindle pump, vane pump, vane-cell pump, rotary-vane pump, rotary-plunger pump, piston pump, in-line piston pump, radial-piston pump, axial-piston pump.

12. Clutch system according to one of Claims 1 to 11, **characterized in that** the hydraulic-medium pump arrangement has at least one piston pump (400; 500) with, integrated therein, an electrical machine which includes at least one piston element (406; 506) of the piston pump and which converts electrical energy into mechanical energy by imparting a lifting movement to the piston element.

13. Clutch system according to Claim 12, **characterized in that** the piston element (406; 506) is manufactured at least partially from magnetic or magnetizable material or has an interaction portion consisting of magnetic or magnetizable material, and **in that** a housing containing the piston element has a magnet-coil arrangement which can be rendered live and which serves for generating a magnetic field imparting a lifting movement to the piston element by means of a magnetic or magnetizable material.

14. Clutch system according to one of Claims 1 to 13, **characterized in that** a valve arrangement (216a, 216b; 217, 217a, 217b) is provided, which is arranged on the clutch side of the hydraulic-medium pump arrangement and by means of which the clutch-side hydraulic pressure and/or the pressure level can be limited and/or, if required, the pressure level can be reduced.

15. Clutch system according to one of Claims 1 to 14, **characterized in that** the hydraulic-medium pump arrangement has at least one pump (500), by means of which, if required, the pressure level can be reduced by the discharge of hydraulic medium.

16. Clutch system according to Claim 15, **characterized in that** the hydraulic-medium pump arrangement has at least one pump (400) for building up or increasing the pressure level and at least one pump (500) for breaking down or reducing the pressure level.

17. Clutch system according to Claim 15 or 16, **characterized in that** the hydraulic-medium pump arrangement has at least one pump (210a, 210b) which can be operated with a changing feed direction.

18. Clutch system according to one of Claims 1 to 17, **characterized by** a pressure damper (215a, 215b) which equalizes the clutch-side pressure and/or the pressure level and which is preferably designed in the manner of a pressure accumulator.

19. Clutch system according to one of Claims 1 to 18, **characterized by** at least one leakage point in a hydraulic connection between the hydraulic pump arrangement and the slave cylinder.

20. Clutch system according to one of Claims 1 to 19, **characterized in that** the clutch device has at least one first slave cylinder (202b) assigned to a first clutch arrangement (304) and at least one second slave cylinder (202a) assigned to a second clutch arrangement (306), preferably the first and the second slave cylinder each being assigned its own hydraulic-medium pump arrangement (210b and 210a) which can be influenced, independently of the other hydraulic-medium pump arrangement in each case, with regard to the discharge pressure and/or the feed quantity and/or the feed direction and which is arranged and set up for the purpose that, by the respective hydraulic-medium pump arrangement being influenced, a pressure level, determining the actuating state of the first or the second clutch arrangement, and consequently the actuating state of the respective clutch arrangement can be adjusted.

21. Clutch system according to Claim 20, **characterized in that** the first clutch arrangement (304) is assigned to a first transmission input shaft (314) and the second clutch arrangement (306) to a second transmission input shaft (316) of a power-operated shift transmission.

## Revendications

1. Système d'embrayage, comprenant un dispositif d'embrayage (302) à disposer notamment dans une ligne d'entraînement entre une unité d'entraînement et un mécanisme de transmission, et comprenant un dispositif d'actionnement (200) pour actionner le dispositif d'embrayage par voie hydraulique par l'intermédiaire d'au moins un cylindre récepteur hydraulique (202a, 202b) du dispositif d'embrayage, le dispositif d'actionnement présentant un système hydraulique avec un dispositif (210a, 210b) d'alimentation en fluide hydraulique pour fournir du fluide hydraulique à un niveau de pression réglable, déterminant par l'intermédiaire du cylindre récepteur l'état d'actionnement du dispositif d'embrayage, le système hydraulique étant réalisé sous forme de système ouvert, raccordé à un réservoir hydraulique, le cylindre récepteur se trouvant à l'intérieur du dispositif d'embrayage, lequel présente au moins un groupe de disques refroidi au moyen du fluide hydraulique du système hydraulique, et le dispositif d'alimentation en fluide hydraulique présentant un ensemble de pompe à fluide hydraulique dont la pression de sortie et/ou le débit et/ou le sens de refoulement est modifiable, **caractérisé en ce que** l'ensemble (210a, 210b) de pompe à fluide hydraulique est relié en liaison fonctionnelle directe audit au moins un cylindre récepteur et est conçu de telle sorte qu'en agissant sur l'ensemble (210a, 210b) de pompe à fluide hydraulique, on peut directement régler le niveau de pression et donc l'état d'actionnement.

2. Système d'embrayage selon la revendication 1, **caractérisé en ce que** l'ensemble (210a, 210b) de pompe à fluide hydraulique est raccordé au cylindre récepteur (202a, 202b) par l'intermédiaire d'une liaison de fluide hydraulique qui ne contient pas d'ensemble de soupape de commande/régulation pour régler le niveau de pression.

3. Système d'embrayage selon la revendication 1 ou 2, **caractérisé en ce que** le dispositif d'embrayage (302) peut, au moyen de l'ensemble (210a, 210b) de pompe à fluide hydraulique et par l'intermédiaire du cylindre récepteur (202a, 202b), être actionné en fonction d'une grandeur de référence représentant un état d'actionnement de consigne du dispositif d'embrayage et d'une grandeur réelle représentant un état d'actionnement réel du dispositif d'embrayage.

4. Système d'embrayage selon la revendication 3, **caractérisé en ce que** la pression de sortie et/ou le débit et/ou le sens de refoulement de l'ensemble (210a, 210b) de pompe à fluide hydraulique peut être modifié en fonction d'une grandeur différentielle associée à la grandeur de référence et à la grandeur réelle.

5. Système d'embrayage selon la revendication 3 ou 4, **caractérisé en ce qu'**au moins une des grandeurs - grandeur de référence, grandeur réelle et le cas échéant grandeur différentielle - est une grandeur hydraulique, mécanique ou électrique, notamment une pression, un volume, une force, une course, un courant ou une tension électrique.

6. Système d'embrayage selon l'une des revendications 3 à 5, **caractérisé par** un dispositif de régulation d'actionnement, qui régule l'ensemble (210a, 210b) de pompe à fluide hydraulique dans au moins un état de fonctionnement du système d'embrayage sur la base de la grandeur de référence et de la grandeur réelle, afin d'embrayer au moins partiellement ou de débrayer au moins partiellement le dispositif d'embrayage (302) ou de maintenir un état d'actionnement du dispositif d'embrayage.

7. Système d'embrayage selon l'une des revendications 3 à 6, **caractérisé en ce que** la grandeur réelle représente une pression effective du fluide hydraulique du côté sortie de l'ensemble (210a, 210b) de pompe à fluide hydraulique, éventuellement le niveau momentané de pression lui-même.

8. Système d'embrayage selon l'une des revendications 3 à 7, **caractérisé en ce que** la grandeur de référence représente une pression de consigne du fluide hydraulique du côté sortie de l'ensemble (210a, 210b) de pompe à fluide hydraulique, éventuellement une valeur de consigne pour le niveau de pression, ou un état de consigne du dispositif d'embrayage, éventuellement une position d'un piston du cylindre récepteur hydraulique (202a, 202b) ou un état d'embrayage/débrayage/patinage du dispositif d'embrayage (302).

9. Système d'embrayage selon l'une des revendications 1 à 8, **caractérisé en ce que** l'ensemble de pompe à fluide hydraulique présente au moins une pompe (210a, 210b), pouvant être entraînée par un entraînement de pompe et dont le débit volumétrique de refoulement peut être réglé quant à sa grandeur et/ou son sens, par un pilotage correspondant de l'entraînement de pompe (212a, 212b) et/ou par réglage d'un mécanisme d'accouplement reliant l'entraînement de pompe à la pompe et/ou par réglage de la pompe.

10. Système d'embrayage selon l'une des revendications 1 à 9, **caractérisé en ce que** l'ensemble (210a, 210b) de pompe à fluide hydraulique présente au moins une pompe réalisée sous forme de machine volumétrique ou de pompe hydrostatique, en particulier une pompe réalisée sous forme de machine volumétrique rotative ou de machine volumétrique alternative.

11. Système d'embrayage selon l'une des revendications 1 à 10, **caractérisé en ce que** l'ensemble (210a, 210b) de pompe à fluide hydraulique comprend au moins une pompe du groupe formé des types de pompe suivants pompe G-rotor, pompe à denture, pompe à engrenages, pompe à engrenage extérieur, pompe à engrenage intérieur, pompe à couronne dentée, pompe à vis, pompe à ailettes, pompe à palettes, pompe rotative à ailettes, pompe à piston oscillant, pompe à piston, pompe à pistons en ligne, pompe à piston radiale, pompe à piston axiale.

12. Système d'embrayage selon l'une des revendications 1 à 11, **caractérisé en ce que** l'ensemble de pompe à fluide hydraulique présente au moins une pompe à piston (400 ; 500) dans laquelle est intégrée une machine électrique incluant au moins un élément formant piston (406 ; 506) de la pompe à piston, machine qui transforme l'énergie électrique en énergie mécanique en conférant un mouvement alternatif à l'élément formant piston.

13. Système d'embrayage selon la revendication 12, **caractérisé en ce que** l'élément formant piston (406 ; 506) est fabriqué au moins partiellement en matériau magnétique ou magnétisable ou présente une partie d'interaction en matériau magnétique ou magnétisable, et **en ce qu'**un boîtier contenant l'élément formant piston présente un ensemble de bobine magnétique pouvant être alimenté en courant électrique, qui sert à produire un champ magnétique conférant, par l'intermédiaire du matériau magnétique ou magnétisable, un mouvement alternatif à l'élément formant piston.

14. Système d'embrayage selon l'une des revendications 1 à 13, **caractérisé en ce qu'**il est prévu un ensemble de soupape (216a, 216b ; 217, 217a, 217b), disposé côté embrayage de l'ensemble de pompe à fluide hydraulique et permettant de limiter la pression hydraulique côté embrayage et/ou le niveau de pression, et/ou de réduire en cas de besoin le niveau de pression.

15. Système d'embrayage selon l'une des revendications 1 à 14, **caractérisé en ce que** l'ensemble de pompe à fluide hydraulique présente au moins une pompe (500) qui permet de réduire en cas de besoin le niveau de pression par évacuation de fluide hydraulique.

16. Système d'embrayage selon la revendication 15, **caractérisé en ce que** l'ensemble de pompe à fluide hydraulique présente au moins une pompe (400) pour établir ou augmenter le niveau de pression et au moins une pompe (500) pour supprimer ou réduire le niveau de pression.

17. Système d'embrayage selon la revendication 15 ou 16, **caractérisé en ce que** l'ensemble de pompe à fluide hydraulique présente au moins une pompe (210a, 210b) qui peut être exploitée avec un sens de refoulement alternant.

18. Système d'embrayage selon l'une des revendications 1 à 17, **caractérisé par** un amortisseur de pression (215a, 215b) uniformisant la pression côté embrayage et/ou le niveau de pression, qui est réalisé de préférence à la manière d'un accumulateur de pression.

19. Système d'embrayage selon l'une des revendications 1 à 18, **caractérisé par** au moins un point de fuite dans une liaison hydraulique entre l'ensemble de pompe hydraulique et le cylindre récepteur.

20. Système d'embrayage selon l'une des revendications 1 à 19, **caractérisé en ce que** le dispositif d'embrayage présente au moins un premier cylindre récepteur (202b) associé à un premier ensemble d'embrayage (304) et au moins un deuxième cylindre récepteur (202a) associé à un deuxième ensemble d'embrayage (306), un propre ensemble (210b ou 210a) de pompe à fluide hydraulique étant de préférence respectivement associé au premier et au deuxième cylindre récepteur, ensemble dont, indépendamment de l'autre ensemble respectif de pompe à fluide hydraulique, la pression de sortie et/ou le débit et/ou le sens de refoulement est modifiable, et qui est disposé et conçu pour qu'en agissant sur l'ensemble respectif de pompe à fluide hydraulique, on puisse régler un niveau de pression déterminant l'état d'actionnement du premier ou respectivement du deuxième ensemble d'embrayage, et donc régler l'état d'actionnement de l'ensemble d'embrayage concerné.

21. Système d'embrayage selon la revendication 20, **caractérisé en ce que** le premier ensemble d'embrayage (304) est associé à un premier arbre d'entrée de boîte (314) et le deuxième ensemble d'embrayage (306) à un deuxième arbre d'entrée de boîte (316) d'une boîte de vitesses commandée en charge.
